# EUROPEAN PATENT APPLICATION

(11) **EP 2 814 141 A1**
(43) Date of publication of application: **17.12.2014**
(21) Application number: 13171439.6
(22) Date of filing: 11.06.2013
(51) Int. Cl.: H02K 1/27

(54) **Rotor for an electronically-commutated motor**

(71) Applicant: Robert Bosch GmbH, 70442 Stuttgart (DE)
(72) Inventor: Jordan, Christopher Mark, Stowmarket, Suffolk IP14 2RA (GB)

(57) **Abstract**

The present invention concerns a rotor (200) for an electronically commutated motor which comprises a low magnetic permeability core (210), a plurality of magnets (230), and high magnetic permeability separators (220) between adjacent magnets. Each separator (220) is attached to the core (210) and is isolated from the adjacent separators (220) by the low magnetic permeability core (210), so that magnetic flux is discouraged from passing through the core (210). The invention increases the magnetic flux density in the air gap between the rotor (200) and its associated stator, thus increasing the efficiency of the motor.

## Description

The present invention relates to a rotor for an electronically-commutated motor and also to a motor comprising such a rotor.

Electronically-commutated motors typically comprise a stator pack, and a rotor which rotates within the stator under the "motor effect". The present invention relates to such motors of the type wherein the rotor comprises fixed magnets and the stator comprises wound wire forming electromagnets.

Within the prior art, it is known to provide a fixed magnet rotor with surface mounted magnets (discrete magnets fixed to the outside diameter of the rotor), ring magnets (magnetic rings fixed over the outside diameter of the rotor) and buried magnets (discrete magnets fixed in slots within the rotor). Surface mounted magnets are typically secured using a combination of screws, glue and dovetails. Magnets which are buried within the rotor body are often attached using glue as well, in order to secure them to the rotor.

The electric motor works through the interaction of two magnetic fields generated by the rotor and the stator respectively. However, in rotors where the magnets are buried within the rotor body, part of the magnetic flux which flows from the north to the south poles of the magnets referred to as "N" and "S" respectively may deviate from the optimum-interaction path, which is outwards towards the stator, and instead pass through the centre of the rotor body, in similar fashion to an electric current seeking out the path of least resistance. This analogy is extended by referring to the effect of the magnetic flux lines travelling through the centre of the rotor body *"short circuiting"* through the central rotor core material. The more magnetic flux that flows through the centre of the rotor body, and not therefore outwards and interacting with the stator magnetic field, the less efficient the motor. Magnetic flux flowing through the centre of the rotor body is essentially 'lost', and not available to engage with the magnetic flux generated by the stator. The problem of magnetic flux *"short circuiting"* through the body therefore reduces the efficiency of the motor.

When securing the magnets into or onto the body of the rotor, the gluing action must necessarily be accurate and requires very good quality control, which is both time consuming and labour-intensive. The present invention seeks to overcome the above problems, namely avoiding losing magnetic flux through the magnetic flux lines *"short circuiting"* through the centre of the rotor body, and the requirement for costly and time consuming gluing of the rotor components.

In its broadest sense, the present invention provides a rotor for an electromagnetic motor comprising a low magnetic permeability core, an even number of magnets spaced circumferentially around the core with each adjacent pair of magnets oriented with the same poles facing each other, and a high magnetic permeability separator between each adjacent pair of magnets, wherein each separator is attached to the core and wherein each separator is isolated from the adjacent separators by the low magnetic permeability core.

In at least preferred embodiments, the high magnetic permeability separators are formed as separate components and are not in direct contact with each other. The low magnetic permeability core insulates the separators from one another. The magnetically-isolated separators help to reduce the amount of magnetic flux that is lost in the core by failing to provide a continuous magnetically permeable route through the core for the flux to flow from north to south poles, instead interrupting the route with a section of low magnetic permeability core. By discouraging the magnetic flux from passing through the core, the invention increases the magnetic flux density in the air gap between the rotor and its associated stator, thus increasing the efficiency of the motor.

The term "adjacent" in the context of an adjacent pair of magnets or separators does not mean "immediately adjacent", since adjacent magnets will have a separator between them, and adjacent separators will have a magnet between them. In this context, adjacent is referring to the next component of the same type when moving in a circumferential direction.

Preferably, the high magnetic permeability separators are formed from a series of steel laminations. The thinly layered laminations reduce iron loss by restricting the flow of eddy currents produced by the varying magnetic flux. Preferably the rotor comprises an even number of substantially identical separators.

Preferably, the high magnetic permeability separators are mechanically retained and located by the core and more preferably, are engaged with the core by grooves and/or dovetailed joints to provide simple and strong locating means.

Preferably, the outer perimeter of each separator is less than or substantially equal to the depth of the magnet pole face. This provides a "focusing effect" for the magnetic flux of at least a factor two, as will be explained further below.

Preferably, the pole faces of each magnet are substantially parallel to the radial plane on which the magnet lies. Furthermore, the pole faces of each magnet are preferably substantially parallel to the respective adjacent separator face, with substantially the entire magnet pole face opposing and being immediately adjacent to the separator face. In this way, the entire face of the magnetic pole is in "full face contact" with the adjacent laminated separator piece to capture the maximum available flux.

Preferably, the magnets are mechanically retained and located by the core, and more preferably, the magnets have a groove in each end to facilitate securement to the rotor.

Preferably, the core is formed from a plastics material to provide a lightweight, strong and low magnetically permeable material. Preferably the core is moulded, and more preferably the rotor further comprises a shaft inserted into the core and moulded in place during moulding of the core. This reduces the assembly steps needed later on.

The invention also extends to an electromagnetic motor comprising a rotor as described herein and a stator. Preferably, the minimum distance through the core between adjacent separators is at least about five times greater than the rotor to stator air gap. The rotor preferably further comprises a shaft mounted at the centre of the core, and preferably the minimum distance through the core between each separator and the shaft is at least about four times greater than the rotor to stator air gap.

The motor may be employed in a lawn care device, for example, or in other electrical apparatus.

An embodiment of the invention will now be described by way of example only, and with reference to the accompanying drawings, in which:
Figures 1a and 1b show a rotor core and magnet arrangement as known in the prior art;
Figure 2 is a perspective view of the completed rotor in accordance with the present invention;
Figure 3 is a partially exploded perspective view of the rotor in accordance with the present invention;
Figure 4 is a perspective view of a magnet and associated magnetic field lines;
Figure 5 is a perspective view of a laminated separator; and
Figure 6 is a partial view of the completed rotor of the present invention including magnetic field lines.

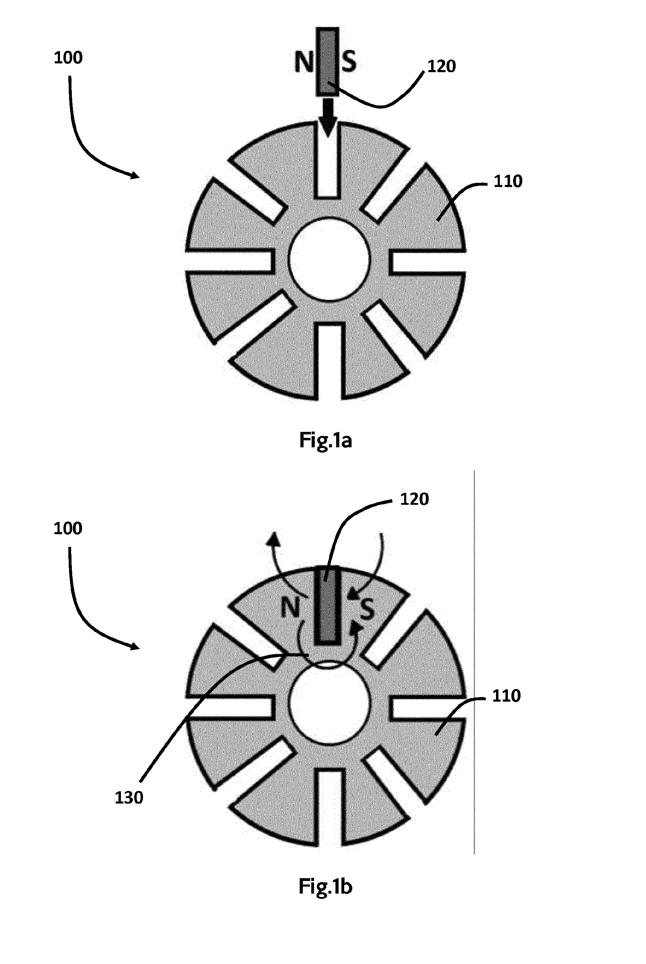

Figures 1a and 1b show a rotor body 110 and magnet 120 arrangement as known in the prior art. The rotor body 110 is viewed end-on, and constructed of multiple laminated layers stacked one on top of another (i.e. behind in the figures), forming a laminated rotor body. If the magnets 120 of the rotor are buried within the body there will typically be "short circuit" paths 130 through the laminate material from the north to south poles of the magnets, and this in turn reduces magnetic flux density in the air gap between the rotor and the stator. The magnetic field lines can be seen flowing through the rotor body 110 following the path of least resistance.

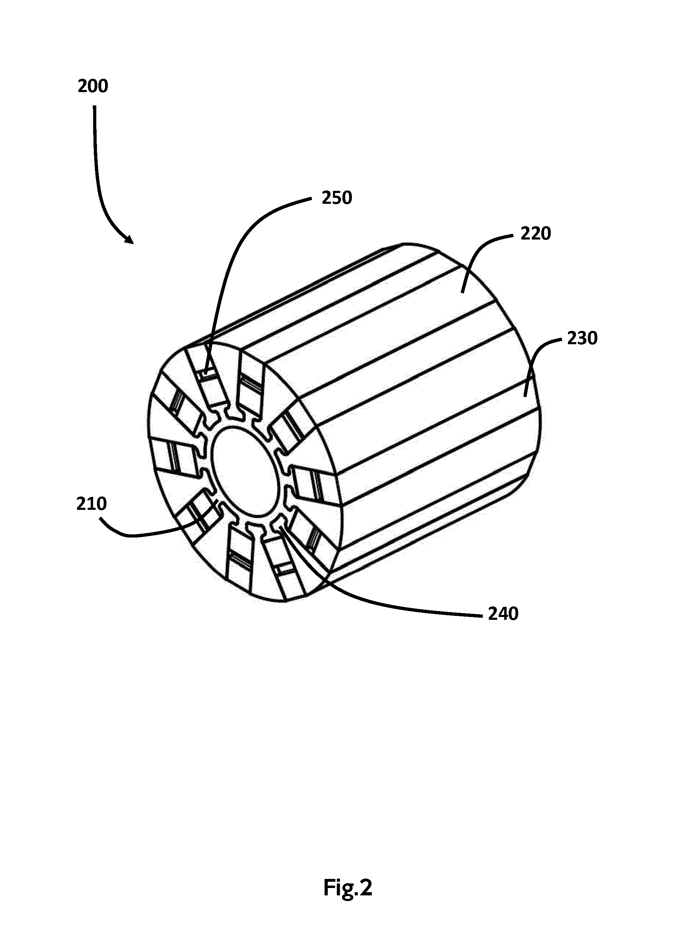

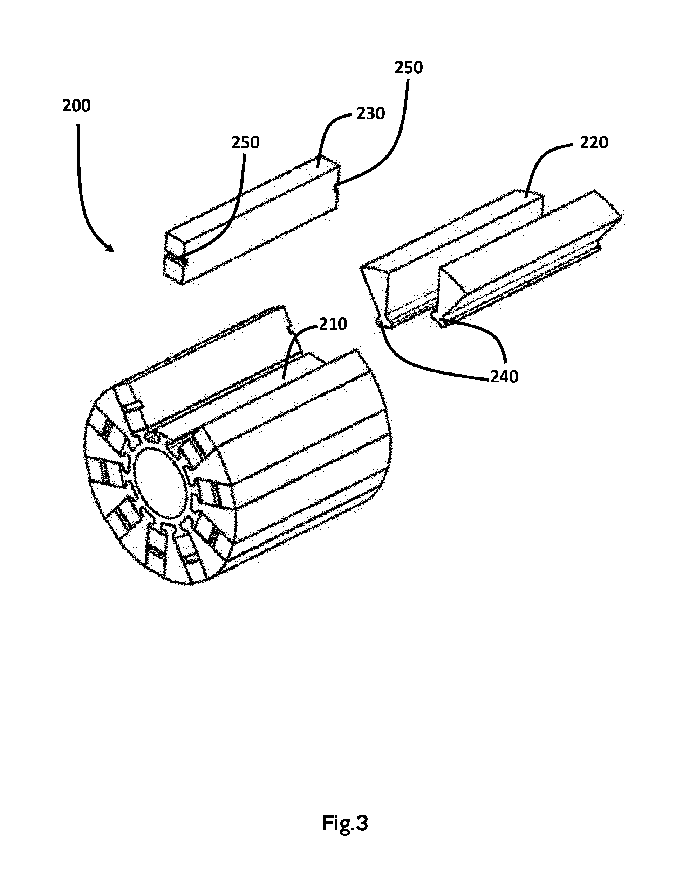

As can be seen in Figures 2 and 3, the present invention comprises a rotor 200 comprising a solid plastic core 210, laminate separators 220, and magnets 230. In the example embodiment, the rotor 200 comprises ten individual laminate separators 220 with dovetail features 240 securing them to the plastic core 210. The plastic core 210 has a low magnetic permeability, and reduces magnetic flux short-circuiting through it. Additionally, each of the ten magnets 230 has a groove 250 in either end allowing end caps or mouldings (not shown) to secure the magnets 230 in place in the rotor. Preferably the individual laminate separators are all of the same design.

The core 210 of the rotor 200 comprises a solid plastic moulding with low magnetic permeability and grooves for accommodating the dovetail joints of each of the laminate separators 220. The laminate separators 220 are formed as discrete separate components and are critically not in direct contact with each other. This ensures there is no "short-circuit" route of relative high magnetic permeability between any two adjacent separators 220. When inserting the magnets 230 into the rotor, the magnets 230 are placed with north faces facing each other, and likewise south faces facing each other. This requires an even number of magnets 230 to be placed in the rotor 200 to maintain the opposite pairings. The direct distance through the core between separator dove tails should be substantially greater than the rotor to stator air gap (typically 0.5mm), and preferably at least five times greater. The distance similarly between separator and shaft should be at least four times the air gap.

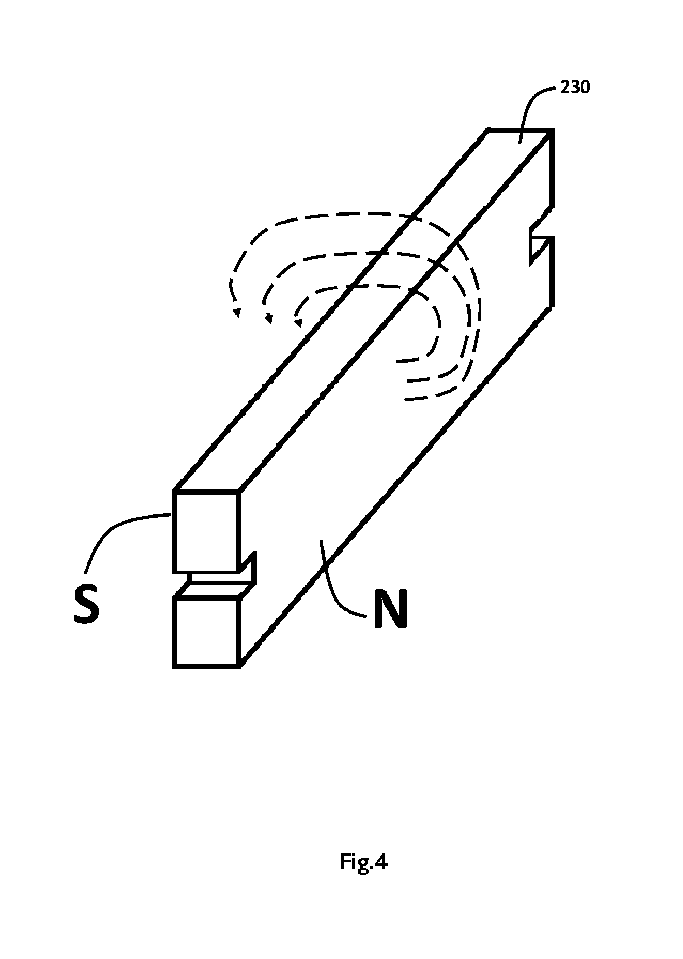

As seen in Figure 4, the magnets 230 are bar magnets wherein the north and south poles of the magnets are situated along each of the long faces of the bar magnet. The north and south poles of the bar magnet are on either side of the long faces of the bar magnet, and the magnetic field lines are shown between the north and south poles of the bar magnet. Magnetic field lines indicate the direction of the magnetic field, and the density of the magnetic field lines at a given point indicates the strength of the magnetic field at that point. Therefore, the flux density, and thus magnetic field strength, is greatest nearest the pole where the magnetic field lines are most dense.

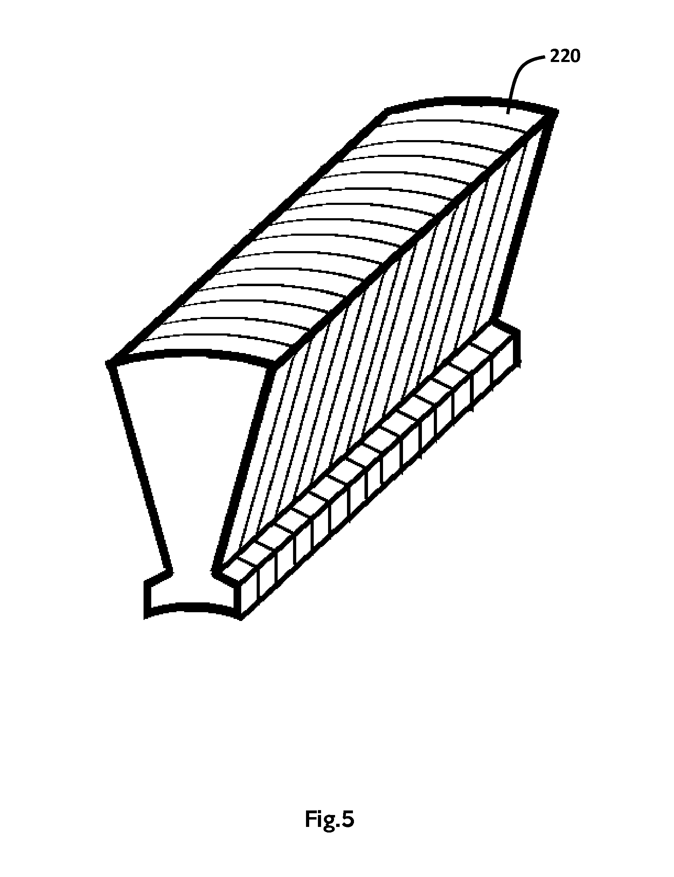

As seen in Figure 5, each laminate separator 220 is made up of several layers of material laminated together along its length providing a stack of material in the longitudinal direction of the laminate separator. The magnetic flux lines from adjacent bar magnets are carried by the laminate separator pieces and loop radially outward from them and into the air gap between the rotor 200 and the stator (not shown). This increases the magnetic flux density in the air gap between the rotor and the stator, thus increasing the electric motor effect and improving the efficiency of the electric motor. As discussed previously, any magnetic flux lost through "short circuits" between the laminate separators within the rotor is not put to work in turning the rotor when the motor is switched on. Therefore by guiding as much magnetic flux into the air gap between the rotor and the stator, the efficiency of the electric motor may be improved.

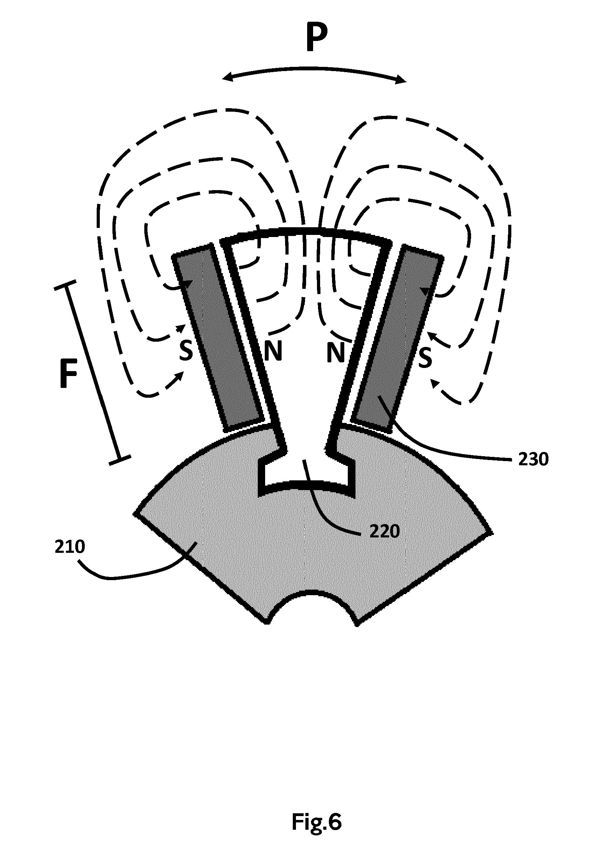

As can be seen in Figure 6 the proportions of the laminated separator pieces 220 provide an additional contribution to the increasing of the air gap flux density by focusing the magnetic flux in the air gap. The entire face of the magnetic pole is in full face contact with the laminated separator pieces to capture the maximum available flux. The magnets are oriented radially with the north and south poles on either side, aligned in a radial direction, so that the magnetic flux path goes from one pole, out across the air gap, and returns across the air gap to the other pole of the same magnet. By symmetry, the flux from each magnet 230 will be confined to its respective half of the laminated separating piece perimeter since same poles repel. As the complete flux path from N to S of each magnet 230 also crosses the air gap twice, it is important that the length of the perimeter segment P is less than the magnet pole face depth dimension F. This provides a "focus effect" of at least a factor of two, which is comparable with a surface mounted construction in which the pole faces are arranged tangentially and in which complete flux paths include two magnets. By this means, the construction of the present invention can achieve the same effectiveness as a typical surface-mounted construction but with half the number of magnets. Alternatively, the same effectiveness can be achieved with a similar or increased number of lower strength, lower cost magnets.

The effect of placing the magnets with same poles facing each other is that the magnetic flux lines are repelled by each other, and thus encouraged to flow outward into the air gap between the rotor 200 and interact with the magnetic field of the stator (not shown). The increased magnetic flux contained within the air gap between the stator and the rotor improves the overall electromotor effect and thus improves the effectiveness of the electric motor. Furthermore, the non-touching and individual nature of the laminate separators 220 means that less flux is lost inside the rotor core 210, and the separators also help focus the magnetic flux outwards.

Alternative arrangements of the above embodiments will, of course, be readily apparent to the skilled person. One such alternative arrangement involves the magnets arranged circumferentially around the outside diameter of the rotor. Other numbers of laminates and magnets may be utilised aside from ten. The material of the core may be some other aside from plastic, and may be formed from injection moulding, amongst other moulding techniques. Other joining methods aside from a dovetail joint and a groove for engaging the laminate pieces with the plastic core may be utilised.

## Claims

1. A rotor (200) for an electromagnetic motor comprising;
a low magnetic permeability core (210);
an even number of magnets (230) spaced circumferentially around the core (210) with each adjacent pair of magnets (230) oriented with the same poles (N,S) facing each other; and
a high magnetic permeability separator (220) between each adjacent pair of magnets (230), wherein each separator (220) is attached to the core (210) and wherein each separator (220) is isolated from the adjacent separators (220) by the low magnetic permeability core (210).

2. The rotor according to claim 1, in which the high magnetic permeability separators (220) are formed from a series of steel laminations.

3. The rotor according to claim 1 or claim 2, in which the high magnetic permeability separators (220) are mechanically located and retained in the core (210).

4. The rotor according to any preceding claim, in which the high magnetic permeability separators (220) are attached to the core (210) by dovetailed joints.

5. The rotor according to any preceding claim, in which the outer perimeter (P) of each separator (220) is less than or substantially equal to the depth of the magnet (230) pole face (F).

6. The rotor according to any preceding claim, comprising an even number of substantially identical separators (220).

7. The rotor according to any preceding claim, in which the pole faces of each magnet (230) are substantially parallel to the radial plane on which the magnet lies.

8. The rotor according to any preceding claim, in which the pole faces of each magnet (230) are substantially parallel to the respective adjacent separator (220) face and in which substantially the entire magnet pole face opposes and is immediately adjacent to the separator face.

9. The rotor according to any preceding claim, in which each magnet (230) is mechanically retained and located in the core (210).

10. The rotor according to any preceding claim, in which each magnet (230) has a groove (250) in each end to facilitate securement to the rotor (200).

11. The rotor according any preceding claim, in which the core (210) is formed from a plastics material.

12. An electromagnetic motor comprising a rotor (200) as claimed in any preceding claim and a stator.

13. The electromagnetic motor of claim 12, in which the minimum distance through the core (210) between adjacent separators (220) is at least five times greater than the rotor to stator air gap.

14. The electromagnetic motor of claim 12 or 13, in which the rotor further comprises a shaft mounted at the centre of the core, and in which the minimum distance through the core between each separator and the shaft is at least four times greater than the rotor to stator air gap.

15. A lawn care device including the motor of any of claims 12 to 14.
